# EUROPEAN PATENT APPLICATION

(11) **EP 0 898 219 A1**
(43) Date of publication of application: **24.02.1999**
(21) Application number: 98306482.5
(22) Date of filing: 14.08.1998
(51) Int. Cl.: G06F 1/18

(54) **Upgrading a storage media bay**

(30) Priority: 22.08.1997 US 918554
(71) Applicant: Compaq Computer Corporation, Houston Texas 77070 (US)
(72) Inventor: Gebara, Ghassa R., Spring, Texas 77379 (US); Bolognia, David F., Kingswood, Texas 77345 (US)
(74) Representative: Brunner, Michael John

(57) **Abstract**

An assembly, for use with a computer, has a media bay and a first connection interface that is configured to communicate with a mass storage device but which is not configured to support certain predetermined features. The assembly includes a frame that is configured to mount in the media bay and hold the mass storage device and a second connection interface that is mounted to the frame and is configured to support the predetermined features. The second connection interface establishes communication between the first connection interface and the mass storage device.

## Description

The invention relates to upgrading a media bay.

A typical computer (e.g., a personal computer or a file server) has a chassis that serves as a frame upon which components of the computer are mounted. One of these components typically is a mass storage device (e.g., a floppy or hard disk drive) which resides in a media bay that is secured to the chassis. A communication cable (e.g., an Intelligent Device Electronics (IDE) cable or a Small Computer System Interface (SCSI) cable) and a power cable extend through one or more openings of the media bay to electrically connect the mass storage device to the computer.

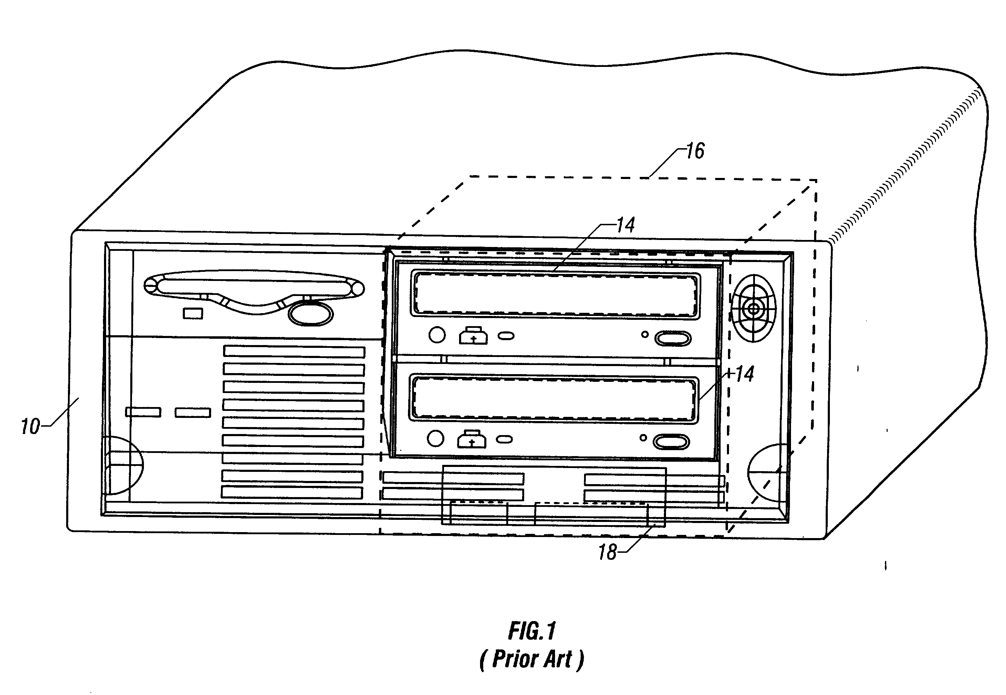

More than one mass storage device may be located in the media bay. For example, referring to Fig. 1, mass storage devices of a computer 10 include a non-hot pluggable hard drive 18 and two removable media drives 14 (e.g., tape or CD ROM drives), all of which are mounted in one media bay 16 ofthe computer 10. As a result ofthe size ofthe media bay 16, different mass storage configurations are possible. For example, in another arrangement, the media bay 16 only holds one removable media drive 14, and the otherwise exposed portion of the media bay that is not occupied by the drive 14 is covered.

Sometimes it is desirable to replace one of the mass storage devices while the computer remains powered up. For example, this drive replacement typically occurs to repair a file server which uses a redundant array of inexpensive disk drives (RAID) to store data. When one of these disk drives fails (i.e., when data cannot be retrieved from the failed drive), the server reconstructs, or rebuilds, the data on a new drive which replaces the failed drive. This rebuilding process may occur while the file server continues to perform other tasks. Thus, if the failed drive is replaced with the new drive while the server remains powered up, the file server remains operational and preexisting operations on the file server are not halted.

A disk drive that is capable of being connected (i.e., plugged) into and disconnected (i.e., unplugged) from the computer while the computer remains powered up typically is referred to as a hot plug drive (e.g., a hot plug SCSI drive). Quite often, a computer comes from the manufacturer with a built-in media bay that is not capable of supporting hot plug drives. For example, the media bay may neither have a hot plug backplane board nor physical features that are required to support hot plug drives. In addition to the media bay, typically, the chassis must be specifically designed to accommodate hot plug drives. As a result, typically, hot plug drive capability cannot be added to a computer that comes from the manufacturer with a chassis that is not designed to accommodate hot plug drives.

In general, in one aspect, the invention features an assembly for use with a computer that has a media bay and a first connection interface that is configured to communicate with a mass storage device. The first connection interface is not configured to support predetermined features. The assembly includes a frame that is configured to mount in the media bay and hold the mass storage device. The assembly includes a second connection interface that is mounted to the frame and is configured to support the predetermined features. The second connection interface establishes communication between the first connection interface and the mass storage device.

Implementations of the invention may include one or more ofthe following. The predetermined features may include features that support a change in an electrical connection status between the mass storage device and the second connection interface (e.g., a hot plug interface) while power to the computer remains turned on. The first connection interface may include a connector, and the second connection interface may include another connector that is configured to mate with the connector of the first connection interface. The second connection interface may include a connector that is configured to mate with the mass storage device.

The frame may be configured to form a slidable connection with the media bay. The media bay may include guides, and the frame may have rails that are configured to form a slidable connection with the guides. The frame may be also configured to form a slidable connection with the mass storage device. The frame may also be configured to hold additional mass storage devices. The mass storage device may have rails, and the assembly may also have tracks that are mounted to the frame and are configured to form a slidable connection with the rails.

The first connection interface may not support hot plugging. The first connection interface may include an IDE or a SCSI connector. The second connection interface may include a circuit board having circuitry and a first connector that is configured to electrically connect the circuitry to the first connection interface. The second connection interface may have a second connector that is configured to electrically connect the circuitry to the second mass storage device.

In general, in another aspect, the invention features an assembly for use with a computer that has a media bay and a first connection interface that is configured to communicate with a mass storage device. The first connection interface is not configured to support a change in an electrical connection status between the mass storage device and the first connection interface while power to the computer remains turned on. The assembly includes a frame that is configured to mount in the media bay and hold the mass storage device. The assembly has a second connection interface that is mounted to the frame and is configured to establish communication between the first connection interface and the mass storage device and support a change in an electrical connection status between the mass storage device and the second connection interface while power to the computer remains turned on.

In general, in another aspect, the invention features a mass storage device magazine for use with a computer having a media bay and first connection interfaces. Each first connection interface is configured to communicate with an associated mass storage device, and each first connection interface is not configured to support a change in an electrical connection status between the associated mass storage device and the first connection interface while power to the computer remains turned on. The magazine has a frame that is configured to mount in the media bay and hold the mass storage devices. The magazine has a second connection interface that is mounted to the frame and is configured to establish communication between the first connection interfaces and the associated mass storage devices. The second connection interface is configured to support a change in an electrical connection status between each mass storage device and the second connection interface while power to the computer remains turned on. The magazine has tracks that are mounted to the frame and are configured to form slidable connections with the rails of the mass storage devices.

In general, in other aspects, the assemblies and the mass storage device magazine are part of a computer system. The computer system has a central processing unit that is configured to communicate with the first connection interface(s).

In general, in another aspect, the invention features a method for use with a computer having a media bay and a first connection interface. The first connection interface is configured to communicate with a mass storage device, and the first connection interface is not configured to support predetermined features. The method includes configuring a frame to hold a mass storage device and configuring the frame to mount in the media bay. A second connection interface is mounted to the frame. The second connection interface is configured to support the predetermined features and establish communication between the first connection interface and the mass storage device.

Among the advantages of the invention are one or more ofthe following. Lower priced computers (e.g., servers, desktops and workstations) can easily and cheaply be upgraded to have hot plug capability. Several hot plug drives may be installed in the computer. No structural modification of the chassis is required. The assemblies and magazine are easily removed and may be one piece units. Without sending a computer back to the manufacturer, the computer may be upgraded with hot plug capability, i.e., the upgrade may be performed by, for example, a computer user or a field service technician.

Other advantages and features will become apparent from the following description with reference to the accompanying drawings, in which:

Fig. 1 is a perspective view of a computer system.

Fig. 2 is an exploded perspective view of another computer system.

Fig. 3 is a perspective view of a hot plug drive magazine of the computer system of Fig. 2.

Fig. 4 is a front view of the hot plug drive magazine.

Fig. 5 is an electrical schematic diagram ofthe computer system of Fig. 2.

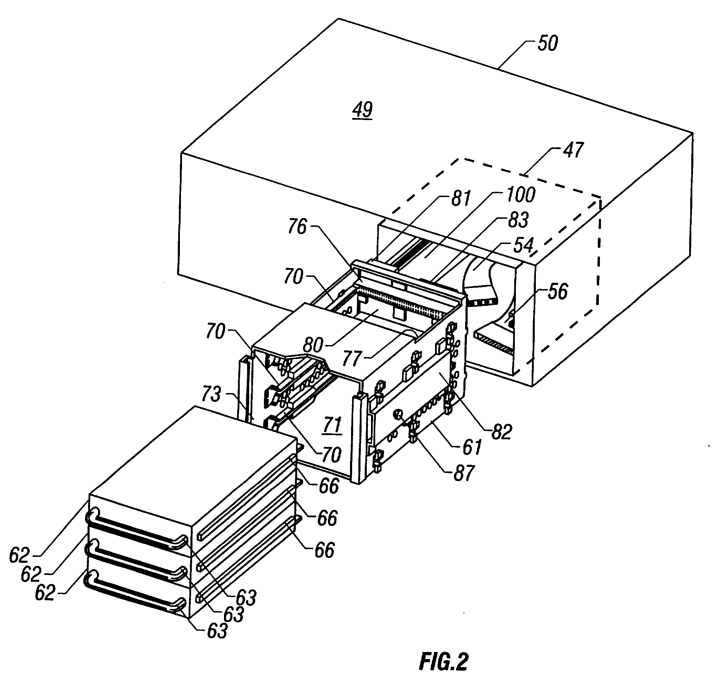

Referring to Fig. 2, a hot plug drive magazine 60 is constructed to retrofit a built-in, non-hot plug media bay 47 (of a computer system 50) with features that support hot plug drives 62. To accomplish this, the magazine 60 has a box-like frame 61 that is configured to mount inside the media bay 47 and receive hot plug drives 62. Mounted to the rear of the frame 61 is a hot plug backplane board 80 that is similar in design to a hot plug backplane board typically found in a built-in hot plug media bay. Once the magazine 60 is installed in the media bay 47, hot plug drives 62 may be inserted into the frame 61 and plugged into the backplane board 80. Thus, as a result of the magazine 60, hot plug drives 62 can be swapped in and out ofthe computer system 50 using the built-in, non-hot plug media bay 47.

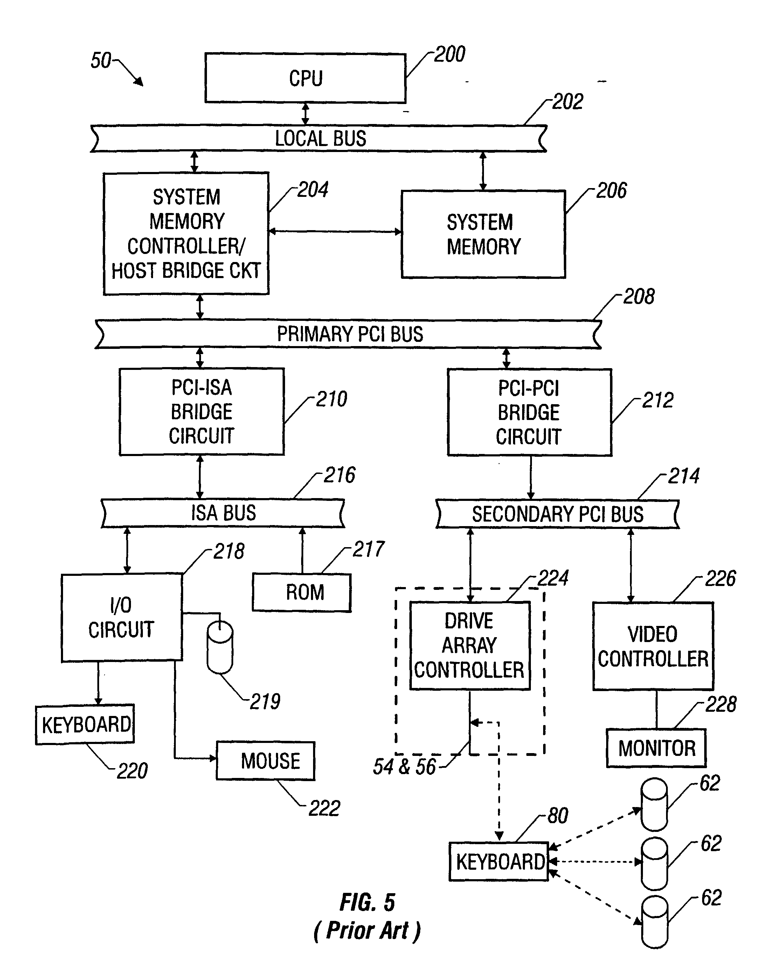

Electrically, the hot plug magazine 60 (via the hot plug backplane board 80) connects to pre-existing cables (e.g., an IDE or a SCSI cable 56 and a power cable 54) of the media bay 47 and converts a non-hot plug interface 39 (see Fig. 5) of the computer system 50 into a hot plug interface. Mechanically, the hot plug magazine 60 equips the media bay 47 with connectors 76 (of the hot plug backplane board 80) and guide tracks 70 to receive the hot plug drives 62.

The installation of the magazine 60 in the media bay 47 includes a sequence of steps that are similar to steps used to install a non hot-plug drive directly in the bay 47. In this manner, power to the computer 50 is first turned off. Next, plugs ofthe power 54 and IDE 56 cables are mated with connectors 81 and 83, respectively, ofthe magazine 60. The box-like shape of the frame 61 fits snugly inside the bay 47, and once completely inside the bay 47, the frame 61 is secured to the sidewalls of the media bay 47 via screws 87. Once power to the computer system 50 is turned on, a central processing unit (CPU) 200 (see Fig. 5) recognizes and initializes circuitry of the magazine 60, and thereafter, the hot plug drives 62 may be swapped in and out of the magazine 60 while power to the computer system 50 remains turned on.

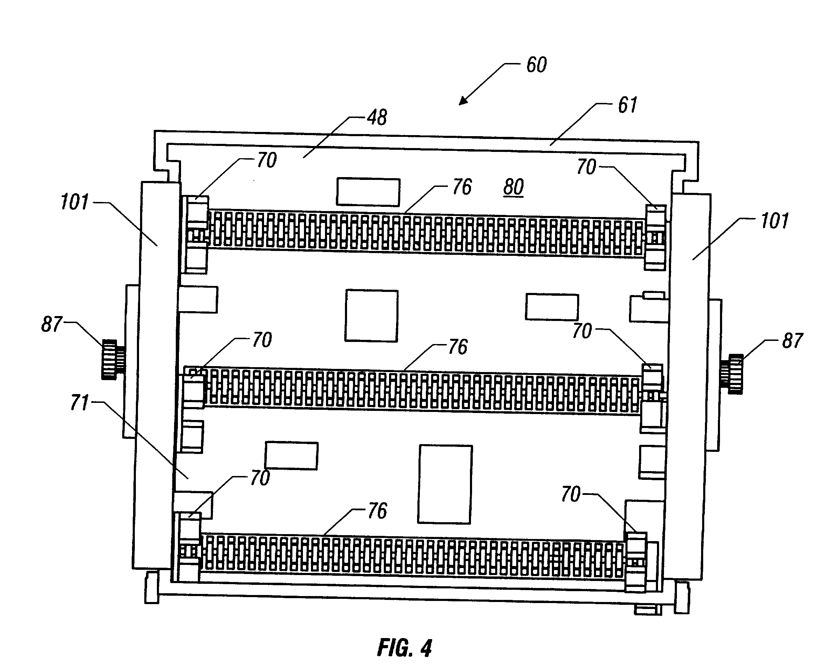

Referring to Figs. 2 and 4, to install one of the drives 62 in the magazine 60, the drive 62 is inserted into a front opening 71 of the frame 61 so that parallel, side guide rails 66 of the drive 62 engage corresponding interior guide tracks 70 that are mounted inside the frame 61. The interior tracks 70 are adapted to form a slidable connection with the rails 66 to guide the drive 62 toward one of three hot plug, spring contact slot connectors 76 located at the interior rear of the frame 61. Installation ofthe drive 62 is completed by exerting sufficient force on the front ofthe drive 62 to force an electrical plug (not shown) at the rear ofthe drive 62 into the slot connector 76. To facilitate removal ofthe drive 62, the drive 62 has a front handle 63 that is pulled to dislodge the drive 62 (and electrical plug) from the slot connector 76.

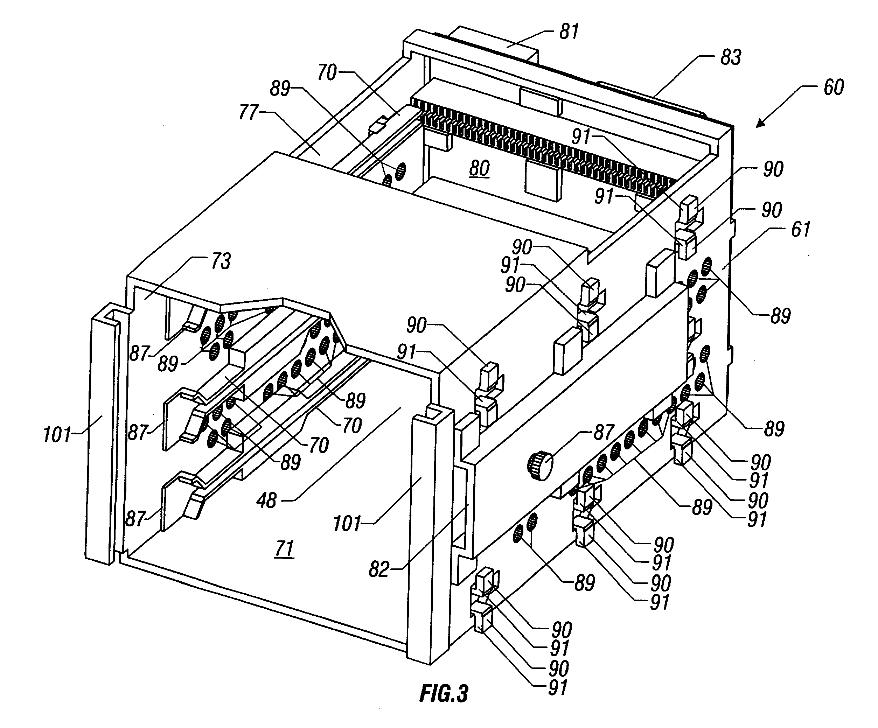

Referring to Fig. 3, the structural support for the magazine 60 is provided by the box-like frame 61 which has open front and rear faces. The backplane board 80 covers the rear open face of the frame 61 and is mounted to the frame 61 via bolts (not shown). The front open face of the frame 61 defines the front opening 71 of the magazine 60 into which the drives 62 are received. The tracks 70 are mounted on the interior sidewalls of the frame 61 and extend from the front opening 71 to the backplane board 80. The tracks 70 are arranged in parallel sets of two, and each pair of tracks 70 is spatially arranged to allow vertical stacking of the drives 62. The slot connectors 76 extend through the rear open end ofthe frame 61 into the interior ofthe frame 61. The backplane board 80 has connectors 81 and 83 to electrically connect the power 54 and IDE/SCSI 56 cables to the backplane board 80.

For purposes of facilitating engagement between the rails 66 and the tracks 70, each track 70 has a V-shaped mouth 87 near the front opening 71. The larger end ofthe mouth 87 provides a guide to catch the rail 66 and guide the rail 66 toward the narrower, long channel 89 ofthe track 70. Although other materials may be used, the tracks 70 are formed from a plastic and are held in place on the frame 61 by tabs 90 which are essentially flared extensions of runners 91 that extend from the back side of the track 70 and through small openings in the sidewall 79.

Among other features oft he magazine 60, the magazine has front, vertical handles 101 at the front opening 71 of the magazine 60. The handles 101 are integral with the frame 61. To facilitate insertion of the magazine 60 into the media bay 47, parallel guide rails 82 are mounted to the exterior of the sidewalls 79 of the frame 61. The guide rails 82 are adapted to slide within corresponding sets of guide tabs 100 which are thin strips formed from the sidewalls ofthe media bay 47. Holes 89 in the sidewalls ofthe frame 61 encourage air flow through the magazine 60 to remove heat from the drives 62.

A top portion 73 of the frame 61 forms a shelf for holding a low profile, CD ROM drive (not shown). This CD ROM drive does not have hot plug capability, and as such, an opening 77 in the top of the frame 61 permits cables (e.g., IDE and power cables) to be extended into the interior of the magazine 60 and connected to this CD ROM drive.

Although, the hot plug drive magazine 60, as shown, accommodate up to three hot plug drives 62, the drive magazine is configured, in other embodiments, to receive more (e.g., four) or fewer (e.g., two) hot plug drives. The hot plug drive magazine may also be configured to accommodate different drive heights. As examples, in different embodiments, the hot plug drive magazine accommodate 1.0 inch high hot plug drives and 1.6 inch high hot plug drives. The hot plug drive magazine, in some embodiments, is configured to receive hot plug drives having the same height, and in other embodiments, receive different hot plug drives having different heights.

Referring to Fig. 5, the computer system 50 includes the CPU 200, a system memory controller/host bridge circuit 204 and a system memory 206, all of which are connected to a local bus 202. The circuit 204 interfaces the local bus 202 to a primary Peripheral Component Interconnect (PCI) bus 208.

A PCI-PCI bridge circuit 212 interfaces the bus 208 to a secondary PCI bus 214 which is connected to a drive array controller 224 and a video controller 226. The drive controller 224 may alternatively be connected to the primary PCI bus 208 or to another bus, such as an Extended Industry Standard Architecture (EISA) bus (not shown). The drive array controller 224, the IDE/SCSI cable 56 and the power cable 54 are all included in the interface 39. The drive array controller 224, via the interface 80, controls up to the hot plug drives 62, and the video controller 226 drives a monitor 228.

A PCI-Industry Standard Architecture (ISA) bridge circuit 210 interfaces the PCI bus 208 to an input/output (I/O) circuit 218 and a read only memory (ROM) 217. The I/O circuit 218 receives input from input/output devices, such as a keyboard 220 and a mouse 222. The I/O circuit 218 controls operations of one or more disk drives 219 (e.g., floppy disk drives).

## Claims

1. An assembly for use with a computer having a media bay and a first connection interface configured to communicate with a mass storage device, the first connection interface not being configured to support predetermined features, the assembly comprising:
a frame configured for mounting in the media bay and for holding the mass storage device; and
a second connection interface mounted to the frame and configured to support the predetermined features and establish communication between the first connection interface and the mass storage device.

2. The assembly of claim 1, wherein the predetermined features include features that support a change in an electrical connection status between the mass storage device and the second connection interface while power to the computer remains turned on.

3. The assembly of claim 1 or claim 2, wherein the second connection interface includes a connector configured to mate with a connector ofthe first connection interface.

4. The assembly of any of claims 1 to 3, wherein the second connection interface includes a connector configured to mate with the mass storage device.

5. The assembly of any of claims 1 to 4, wherein the frame is further configured to form a slidable connection with the media bay.

6. The assembly of claim 5, further comprising rails mounted to the frame and configured to form a slidable connection with guides within the media bay.

7. The assembly of any of claims 1 to 6, wherein the frame is further configured to form a slidable connection with the mass storage device.

8. The assembly of claim 7, comprising tracks mounted to the frame and configured to form a slidable connection with rails of the mass storage device.

9. The assembly of any of claims 1 to 7, wherein the frame is further configured to hold additional mass storage devices.

10. The assembly of any of claims 1 to 9, wherein the second connection interface comprises a hot plug interface.

11. The assembly of any of claims 1 to 9, wherein the first connection interface does not support hot plugging.

12. The assembly of any of claims 1 to 11, wherein the first connection interface includes an IDE connector.

13. The assembly of any of claims 1 to 11, wherein the first connection interface includes a SCSI connector.

14. The assembly of any of claims 1 to 13, wherein the second connection interface comprises:
a circuit board having circuitry;
a first connector mounted to the board and configured to electrically connect the circuitry to the first connection interface; and
a second connector mounted to the board and configured to electrically connect the circuitry to the second mass storage device.

15. An assembly any of claims 1 to 14, wherein
the second connection interface is configured to support a change in electrical connection status between the mass storage device and the second connection interface while power to the computer remains turned on, for use where the first connection interface is not configured to support a change in an electrical connection status between the mass storage device and the first connection interface while power to the computer remains turned on.

16. A mass storage device magazine having an assembly according to any of claims 1 to 15.

17. A computer system comprising:
a media bay;
a mass storage device;
a first connection interface configured to communicate with the mass storage device, the first connection interface not being configured to support predetermined features;
an assembly according to any of claims 1 to 15; and
a central processing unit configured to communicate with the first connection interface.

18. A computer system according to claim 17 when dependent on claim 15, comprising:
plural mass storage devices;
plural first connection interfaces, each first connection interface being associated with one of the mass storage devices and configured to communicate with an associated mass storage device, each first connection interface not being configured to support a change in an electrical connection status between the associated mass storage device and the first connection interface while power to the computer remains turned on.

19. A method for use with a computer having a media bay and a first connection interface configured to communicate with a mass storage device, the first connection interface not being configured to support predetermined features, the method comprising:
configuring a frame to hold a mass storage device;
configuring the frame to mount in the media bay; and
mounting a second connection interface to the frame, the second connection interface being configured to support the predetermined features and establish communication between the first connection interface and the mass storage device.

20. The method of claim 19, wherein the predetermined features include features that support a change in an electrical connection status between the mass storage device and the second connection interface while power to the computer remains turned on.
